(19) Europäisches Patentamt
European Patent Office
Office européen des brevets

(11) **EP 2 807 091 B1**

(12) **EUROPÄISCHE PATENTSCHRIFT**

(45) Veröffentlichungstag und Bekanntmachung des Hinweises auf die Patenterteilung:
**03.05.2017 Patentblatt 2017/18**

(21) Anmeldenummer: **13701277.9**

(22) Anmeldetag: **25.01.2013**

(51) Int Cl.:
**B65D 83/62** *(2006.01)* **B65D 83/64** *(2006.01)*
**C09K 3/30** *(2006.01)*

(86) Internationale Anmeldenummer:
**PCT/EP2013/051512**

(87) Internationale Veröffentlichungsnummer:
**WO 2013/110794 (01.08.2013 Gazette 2013/31)**

(54) **DRUCKBEHÄLTER**

PRESSURE VESSEL

CONTENANT SOUS PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.01.2012 CH 122122012**

(43) Veröffentlichungstag der Anmeldung:
**03.12.2014 Patentblatt 2014/49**

(73) Patentinhaber: **Alpla-Werke Alwin Lehner GmbH und Co.KG**
**6971 Hard (AT)**

(72) Erfinder: **SIEGL, Robert**
**A-6850 Dornbirn (AT)**

(74) Vertreter: **Riederer Hasler & Partner Patentanwälte AG**
**Elestastrasse 8**
**7310 Bad Ragaz (CH)**

(56) Entgegenhaltungen:
**EP-A1- 0 314 554 EP-A1- 2 165 968**
**WO-A1-2007/128157 WO-A2-2006/086032**
**DE-A1- 2 536 702 DE-A1-102007 058 183**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Druckbehälter gemäss Oberbegriff von Anspruch 1.

Stand der Technik:

Aerosolflaschen werden zum Teil heute noch mit schädlichen, fluorierten oder chlorierten Kohlenwasserstoffen als Treibgas befüllt. Weil in vielen industrialisierten Ländern die Verwendung von chlorierten und fluorierten Kohlenwasserstoffen wegen der durch diese verursachte Umweltbelastung (Ozonproblematik) zwischenzeitlich verboten wurde, verwenden die meisten Aerosol Hersteller heutzutage zum Großteil Kohlenwasserstoffe als Treibgas. Diese wirken jedoch als Treibhausgase, die umweltpolitisch verpönt sind.

Auf dem Vormarsch sind deswegen Aerosolflaschen, die mit Stickstoff, $CO_2$ oder Luft angetrieben werden. Das schlechte Image ist jedoch noch tief in der Bevölkerung verwurzelt.

Wegen des auszuhaltenden Innendrucks von zwischen 4 und 10 bar sind die Aerosolflaschen heutzutage in der Regel aus Metall hergestellt. Das kreiszylindrische Design dieser Metallflaschen ist jedoch oft langweilig und entspricht daher nicht mehr den Anforderungen eines modernen Produktmarketings.

Ein weiterer Nachteil von heutzutage verwendeten Aerosolflaschen oder -Dosen ist, dass diese schlecht oder gar nicht wiederbefüllbar sind. Entsorgungstechnisch ist nachteilig, dass die Aerosolflaschen oft aus verschiedenen Materialien bestehen, die das Recycling der Materialien sehr erschwert. Dazu kommt, dass der Flaschenkörper und der Deckel meist bleibend miteinander vercrimpt sind. Der hohe Energieaufwand für die Metallherstellung und die Problematik beim Recycling sind zusätzliche $CO_2$ relevante Minuspunkte, die einer Lösung harren.

Gegenüber den beschriebenen Metallflaschen haben Kunststoffflaschen den Vorteil, dass diese viele optische Effekte und Designs ermöglichen, was bei den Marketingfachleuten gut ankommt. Nachteilig hingegen ist, dass nicht jedes Treibgas in Verbindung mit Kunststoffflaschen eingesetzt werden kann. Aus Polyester und PET nahen Copolyestern und Blends können zwar besonders druckbeständige Behälter hergestellt werden, doch haben diese eine schlechte Barrierewirkung für $CO_2$ und polare Gase, die als Treibmittel verwendet werden könnten. So verliert z.B. eine 500ml Softdrinkflasche etwa 10 bis 30% des $CO_2$ in 10 Wochen. Dies verunmöglicht den Einsatz eines PET - Kunststoffes für unter Druck stehende Abgabebehälter, da die Funktionstüchtigkeit des Abgabebehälters nach relativ kurzer Zeit nicht mehr gegeben ist.

Polyester-Kunststoffe hätten zwar eine besonders gute Barriere gegen unpolare Gase, solange diese größer als Ethan sind. Unglücklicherweise sind die üblichen unpolaren Treibgase wie Propan und Butan jedoch leicht brennbar, was ein erhebliches Sicherheitsrisiko bedeutet. Nicht auszudenken, wenn ein Raucher aus Versehen mit einer Zigarette an eine Polyester Aerosolflasche mit einem brennbaren Stoff und brennbaren Treibgas anstößt und diese in Brand gerät. Auch die Lagerung und der Transport dieser doch potentiell zu Kettenreaktionen neigenden Strukturen aus brennbarer Flasche, Stoff und Treibgas birgt grosse Sicherheitsrisiken. Dies hat die Firmen bisher vom Einsatz solcher Flaschen in grossem Stil abgehalten, sodass diese bis dato nicht wirklich erfolgreich am Markt waren.

Zu berücksichtigen ist ferner, dass bestimmte Treibmittel, wie Etherverbindungen, nicht direkt mit Sonnenlicht in Kontakt kommen sollten. Das heisst, dass sich diese nicht zur Verwendung in einer transparenten Polyesterflasche eignen. Aus diesem Grund besteht ein Bedürfnis nach der Verwendung eines nicht oder weniger leicht brennbaren Treibmittels.

Aus der DE - OS - 25 36 702 ist ein Verfahren bekannt, gemäss welchem Mikroorganismen, welche eine Gärung bewirken und Kohlendioxid freisetzen, in eine Basiszusammensetzung eines zu versprühenden Stoffs eingebracht werden. Zusätzlich wird in die Basiszusammensetzung Zucker oder ein anderes Nahrungsmittel gegeben, welches durch die Mikroorganismen abgebaut werden kann. Nachteilig an diesem Verfahren ist, dass Bestandteile des zu versprühenden Stoffs die Gärung behindern oder gar verunmöglichen können. Es wurde deshalb vorgeschlagen, die für die Gärung schädlichen Bestandteil der Zusammensetzung erst zuzugeben, wenn die Gärung abgeschlossen ist. Dies hat allerdings den grossen Nachteil, dass ein komplizierter Aerosolbehälter mit einem geeigneten Ventil nötig ist, um die schädlichen Bestandteile der Zusammensetzung nach Vollendung der Gärung zuzugeben.

Dieses Problem kann umgangen werden, wenn - wie durch die EP-A-0 314 554 vorgeschlagen - die Nährlösung mit den Mikroorganismen getrennt vom zu versprühenden Stoff ist. Zu diesem Zweck schlägt die EP-A-0 314 554 vor, zuerst die Nährlösung und die Mikroorganismen in einem zusammengefalteten, verschlossenen und gasdichten Beutel in die Aerosolflasche einzubringen und diese danach zu befüllen und zu verschliessen. Je nach Menge von zugegebenem Zucker und Hefe entwickelt sich bereits nach 2 Tagen ein Innendruck von mehr als 9 bar. Nachteilig an der beschriebenen Lösung ist, dass Metallflaschen eingesetzt sind. Wird einer Metalldose lange kein $CO_2$ entnommen, dann wird ein Teil der Mikroorganismen nicht überleben und denaturieren. Die erneute $CÖ_2$ Produktion danach ist entsprechend eingeschränkt und mangelhaft.

Eine Abgabeeinheit für die Abgabe von unter Druck stehenden Flüssigkeiten, Schäumen, Gelen oder dergleichen ist in der WO 2004/096665 beschrieben. Diese besteht aus einem Abgabeventil und einem mit diesem fluiddicht verbundenen Beutel aus flexiblem Folienmaterial. Dieser ist durch eine mit einem Deckel verschliessbare Öffnung eines äusseren Behälters hindurch in diesem platzierbar. Das Abgabeventil hat einen Ventilkörper, welcher in eine Deckelöffnung fluiddicht eingesetzt ist. An den Ventilkörper ist ein Austragsröhrchen, welches sich durch eine Beutelöffnung erstreckt, fluiddicht angeschlossen. Bei der beschriebenen Abgabeeinheit ist - im Unterschied zum Aerosolbehälter der oben beschriebenen EP-A-0 314 554 - die auszugebende Zusammensetzung im Beutel und das Treibmittel im äusseren Behälter aufgenommen.

Einen ähnlichen Fluiddispenser ist in der EP-A-0 471 503 offenbart. Bei diesem Dispenser ist der Beutel mittels zweier Klemmeinrichtungen am Ventilkörper festgemacht. Von den zwei Klemmeinrichtungen ist die eine wenigstens teilweise innerhalb des Beutels und die andere wenigstens teilweise ausserhalb des Beutels angeordnet, wobei die Klemmeinrichtungen mechanisch derart miteinander verbindbar sind, dass eine fluiddichte Abdichtung um die Beutelöffnung hergestellt ist.

### Aufgabe

Es ist deshalb ein Zeil der vorliegenden Erfindung, einen Druckbehälter für ein abzugebendes Stoff bereitzustellen, welcher möglichst ökologisch ist und zu geringen Kosten herstellbar ist. Der Druckbehälter soll einfach befüllt und gegebenenfalls auch wiederbefüllt werden können. Ein weiteres Ziel der Erfindung ist es, einen Druckbehälter vorzuschlagen, welcher mit einem umweltfreundlichen Treibmittel befüllt werden kann. Noch ein Ziel ist es, einen Druckbehälter zur Verfügung zu stellen, welcher sich gut rezyklieren lässt, indem er leicht in die einzelnen Werkstoffe zerlegt werden kann.

### Beschreibung

Diese und weitere Ziele werden durch den Gegenstand gemäss Anspruch 1 erreicht. Vorteilhafte Ausgestaltungen des erfindungsgemässen Gegenstands sind in den Unteransprüchen definiert.

Der Druckbehälter umfasst einen im Wesentlichen formstabilen, vorzugsweise zylindrischen ersten Behälter mit einem Boden und an den Boden anschliessenden Seitenwänden, welche oben in einen vorzugsweise verjüngten Halsbereich übergehen. Am Ende des Halsbereichs ist eine Behälteröffnung vorgesehen, welche mit einem Deckel mit Ventil verschliessbar resp. verschlossen ist. Des Weiteren befindet sich im ersten Behälter ein zweiter Behälter. Dabei ist in einem der Behälter eine auszugebende Grundzusammensetzung und im anderen Behälter eine Treibmittelzusammensetzung in Gestalt einer Nährlösung und Mikroorganismen aufgenommen.

Erfindungsgemäss ist nun der erste Behälter aus einem barrierefreien thermoplastischen Kunststoff hergestellt ist. Dies hat den Vorteil, dass der Behälter einschichtig hergestellt werden kann. Der Vorteil der erfindungsgemässen Lösung besteht ausserdem darin, dass beispielsweise ein blasgeformter PET Druckbehälter zur Lagerung des Füllgutes hergenommen werden kann, wenn eine so grosse Menge einer Nährlösung eingesetzt wird, dass der im Zeitverlauf auftretende Gasverlust kontinuierlich ausgeglichen werden kann. Der Verzicht auf einen mehrschichtigen Aufbau des Kunststoffdruckbehälters hat den Vorteil der geringeren Herstellkosten. Auch ist ein solcher Behälter deutlich kostengünstiger herstellbar als ein Metall-Druckbehälter. Ein weiterer Vorteil ist, dass durch den Einsatz eines sortenreinen Kunststoffes die Rezyklierung vereinfacht ist. Ausserdem können erfindungsgemässe Behälter grundsätzlich wieder befüllt werden, wenn der Deckel als Schraubdeckel ausgeführt ist. Ein Vorteil gegenüber den in der Beschreibungseinleitung zitierten Metalldosen ist, dass durch den permanenten $CO_2$ Verlust (z.B. bei einer PET Flasche), die Mikroorganismen nicht absterben und in einer Zahl aktiv bleiben, dass diese sehr schnell neues $CO_2$ bilden können, wenn ein Konsument durch einen Sprühstoss den Druck kurzfristig absenkt. Im ersten Behälter sind eine Nährlösung und Mikroorganismen aufgenommen, welche Mikroorganismen in der Lage sind, durch Gärung Kohlendioxid freizusetzen. Ausserdem ist der zweite Behälter im Unterschied zum nächstliegenden Stand der Technik am Ventil angeordnet und dient der Aufnahme der auszugebenden Zusammensetzung. Diese Lösung ist vorteilhaft, weil der Behälter einfach befüllt werden kann.

Gemäss einer nichterfindungsgemässe Alternative dient der erste Behälter der Aufnahme der auszugebenden Zusammensetzung, und wenigstens ein zweiter dehnbarer Behälter, in welchem eine Nährlösung und Mikroorganismen aufgenommen sind, ist im ersten Behälter angeordnet. Der dehnbare Behälter ist aus einem solchen Material hergestellt, dass er im Wesentlichen das ganze Behältervolumen ausfüllen kann. Es ist denkbar, eine Mehr- oder Vielzahl von elastischen Behältern vorzusehen. Diese können beispielsweise aus einzelnen elastischen oder gallertartigen Kügelchen bestehen. Die gallertartigen Kügelchen können so konzipiert sein, dass sie einmal in Kontakt mit Wasser zu quellen beginnen.

Zweckmässigerweise ist eine solche Menge Nährlösung eingefüllt, dass der durch den gasdurchlässigen Kunststoff im Zeitablauf verursachte Gasverlust im Wesentlichen ausgeglichen wird. Die Menge der einzusetzenden Nährlösung orientiert sich dabei an der gewünschten Zeit, für welche der Druckbehälter voll funktionstüchtig bleiben soll.

Vorzugsweise wird deshalb eine solche Menge Nährlösung eingefüllt, um wenigstens das 10-fache, vorzugsweise wenigstens das 20-fache und besonders bevorzugt wenigstens das 30-fache Volumen des Druckbehälters an Kohlendioxid zu erzeugen. Der erste Behälter ist aus einem thermoplastischen Kunststoff, insbesondere PET, PET Copolyester mit Isophthalsäure und/oder Diethylenglykol, PET, PEN, PEF, PLA oder einem anderen Kunststoff, wobei PET oder PET Copolyester mit einem bis 8%-igen, vorzugsweise bis 5%-igen Isophthalsäuregehalt bevorugt ist, hergestellt. Der streckblasgeformte Kunststoff besitzt dabei eine Gasdurchlässigkeit für Kohlendioxid von mehr als 0.5 *10$^{-2}$ ml/(cm$^2$ *atm * Tag), vorzugsweise mehr als 1.0 *10$^{-2}$ ml/(cm$^2$ *atm * Tag) und besonders bevorzugt mehr als 2.0 *10$^{-2}$ ml/(cm$^2$ *atm * Tag) Dabei soll die Gasdurchlässigkeit für Kohlendioxid andererseits so klein wie möglich und kleiner als 10 *10$^{-2}$ ml/(cm$^2$ *atm * Tag) sein.

Zweckmässigerweise ist der erste Behälter ausgelegt, um einem Innendruck von mehr als 8 bar, vorzugsweise mehr als 10 bar und besonders bevorzugt mehr als 12 bar standzuhalten. Solche Behälter eignen sich für die Aufbewahrung von unter einem hohen Innendruck stehenden Medien, wie Sprays, Cremen, Schäumen und dergleichen. Der erfindungsgemässe Druckbehälter ist vorzugsweise aus einem Preform in einem Streckblasprozess hergestellt. Von Bedeutung bei der Herstellung von druckstabilen Behältern aus PET oder einen CoPET in einem Streckblasprozess ist dabei die intrinsische Viskosität des eingesetzten Kunststoffs, welche höher als >0.83 dl/g und vorzugsweise höher als >0.85 dl/g sein soll (nach **ISO** 1628/1:2009 bestimmt).

Vorteilhaft ist der zweite Behälter aus einem flexiblen, vorzugsweise dehnbaren Material hergestellt. Geeignete Materialien sind beispielsweise Folien. Der zweite Behälter ist vorzugsweise ein Beutel, vorzugsweise aus einer ein-, zwei- oder noch mehr Schichten aufweisenden Kunststoff- oder Aluminiumfolie, einer Aluminiumfolie, gegebenenfalls ein- oder zweiseitig kunststoffbeschichtet, oder Ähnlichem. Vorteilhaft ist der zweite Behälter mit dem Abgabeventil verschweisst, verklebt, am Abgabeventil angespritzt oder festgeklemmt, sodass eine flüssigkeits- und vorzugsweise gasdichte Verbindung realisiert ist.

Der Deckel zum Verschliessen des Druckbehälters kann aus Metall, insbesondere aus Aluminium, einer Aluminiumlegierung, Weissblech oder Stahlblech, hergestellt sein. Alternativ ist auch ein Schraubverschluss denkbar, wenn der Behälter wieder befüllbar sein soll. Dabei ist eine Dichtung zwischen Deckel und Stirnfläche des Behälterrandes vorgesehen.

Der für die Herstellung des Druckbehälters eingesetzte Kunststoff kann Füllstoffe oder Additive, insbesondere IR-Absorber, UV-Blocker, Chain Extender, Gleitmittel etc. aufweisen. Er kann 0 bis 100%, vorzugsweise 10 bis 80% und ganz besonders bevorzugt 30 bis 60% Regenerat aufweisen. Dadurch lassen sich die Herstellkosten weiter senken. Ausserdem kann rezyklierter Kunststoff sinnvoll verwertet werden.

Vorteilhaft ist der Kunststoff biologisch abbaubar. Biologisch abbaubare Kunststoffe sind beispielsweise aus Polymilchsäure, Polyhydroxyalkanoate, z.B. Polyhydroxybuttersäure, hergestellt.

Ausführungsbeispiele der Erfindung werden nun unter Bezugnahme auf die Zeichnungen beschrieben. Es zeigt:

Figur 1: eine perspektivische Ansicht eines ersten Ausführungsbeispiels eines erfindungsgemässen Druckbehälters;

Figur 2: den Behälter von Fig. 1 in Seitenansicht und teilweise im Schnitt mit einem im Boden vorgesehenen Einbuchtung mit der Gestalt eines Doms;

Figur 3: den Dom von Fig. 1 in vergrössertem Massstab;

Figur 4: den Druckbehälter von Fig. 1 in Unteransicht;

Figur 5: Detail A von Fig. 2 in vergrösserter Ansicht;

Figur 6: den Hals eines erfindungsgemässen Behälters

a) in Seitenansicht (linke Hälfte) und im Schnitt (rechte Hälfte)

b) in Seitenansicht

c) in Seitenansicht um 90 Grad versetzt;

Fig. 7: den Herstellungsprozess des Druckbehälters ausgehend von einem Preform;

Fig. 8: beispielhaft verschiedene Gestaltungen des Druckbehälters;

Fig. 9: den erfindungsgemässen Druckbehälter bei steigenden Druckbelastungen.

Fig. 10: eine Ausführungsform des Druckbehälters;

Fig. 11: den Druckbehälter von Fig. 10 mit Füllgut und Innendruck nach einer Temperaturbehandlung.

Figur 12: eine erste Ausführungsform des erfindungsgemässen Druckbehälters bestehend aus einem ersten äusseren Behälter und einem zweiten inneren Behälter;

Figur 13: ein Beispiel eines nichterfindungsgemässen Druckbehältersystems mit dehn- oder quellbaren Kügelchen;

Figur 14: ein drittes Ausführungsbeispiel eines erfindungsgemässen Druckbehälters mit zwei durch einen Kolben voneinander getrennten Kammern;

Figur 15: ein Beispiel eines nichterfindungsgemässen Druckbehälters mit einem Doppelwandsystem.

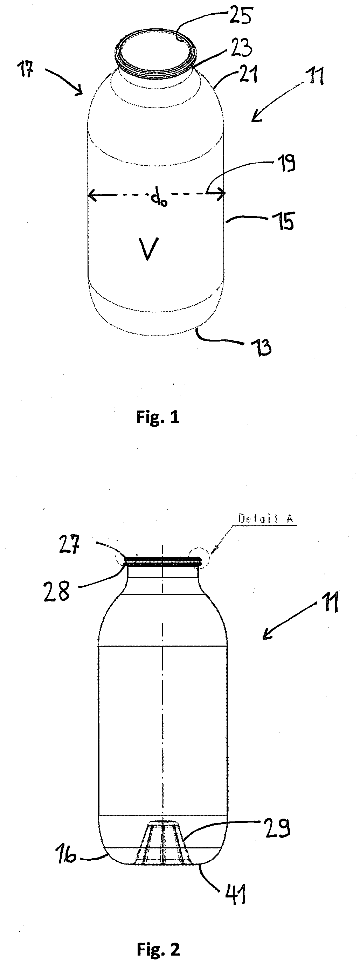

Die Fig. 1 zeigt ein Ausführungsbeispiel eines erfindungsgemässen Druckbehälters 11 zur Abgabe eines Stoffes oder einer Zusammensetzung. Der Druckbehälter 11 hat einen Boden 13, daran anschliessende Seitenwände 15, welche oben in einen sich verjüngenden Halsbereich 17 übergehen. Der Boden 13, Seitenwände 15 und Halsbereich 17 definieren zusammen einen Behälterkörper mit dem Durchmesser $d_0$, welcher mit der Bezugsziffer 19 bezeichnet ist und ein Behältervolumen V umschliesst.

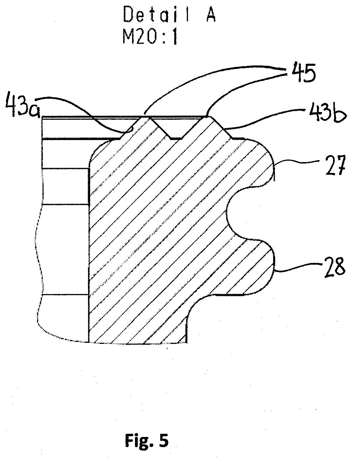

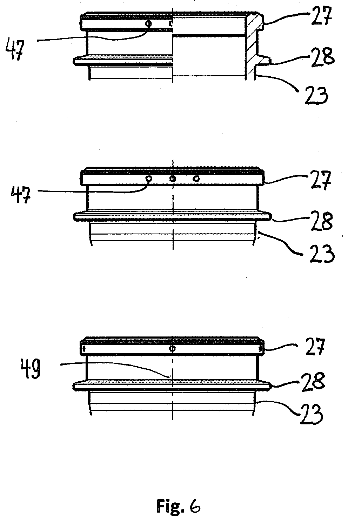

Der Halsbereich 17 umfasst eine Schulter 21, welche in einen zylindrischen Stutzen 23 mit einer Behälteröffnung 25 übergeht. Am äusseren Rand des Stutzens 25 sind zwei radial nach aussen abstehende Ringwulste 27, 28 angeformt. Deren Funktion und mögliche Ausführungsvarianten werden weiter unten im Zusammenhang mit den Figuren 5 und 6 näher beschrieben.

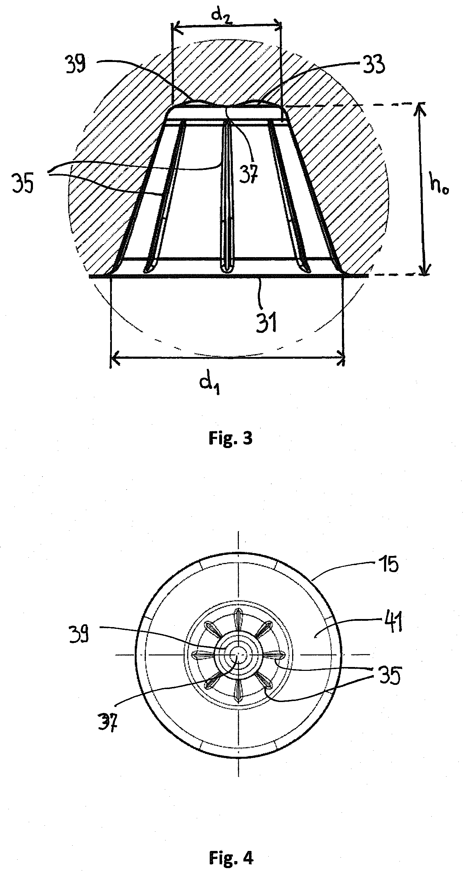

Damit der Boden 13 des Druckbehälters 11 einem hohen Innendruck standhalten kann, ist in der Mitte eine nach innen ragende Vertiefung 29 vorgesehen, welche nachfolgend auch als Dom bezeichnet ist. Der Dom 29 hat gemäss dem gezeigten Ausführungsbeispiel die Gestalt eines Kegelstumpfes mit der offenen Grundfläche 31 und der Deckfläche 33, welche Teil des Behälterbodens 13 ist (s. Fig. 3). Die Grundfläche 31 des Doms besitzt einen Durchmesser $d_1$, und die Deckfläche 33 einen Durchmesser $d_2$. Der Abstand der Grundfläche 31 von der Deckfläche 33 definiert die Höhe $h_0$ des Doms.

Damit der Boden 13 eine hohe Druckbelastung aushalten kann, ist vorteilhaft, wenn einerseits die Durchmesser $d_0$ und $d_1$ und andererseits der Durchmesser $d_1$ und die Domhöhe h in einem bestimmten Verhältnis zueinander stehen. Vorzugsweise liegt der Durchmesser im Bereich $d_1 > 0.33 \, d_0$ und $d_1 < 0.8 \, d_0$ und noch besser im Bereich $d_1 > 0.33 \, d_0$ und $d_1 < 0.65 \, d_0$ und besonders bevorzugt im Bereich $d_1 > 0.35 \, d_0$ und $d_1 < 0.5 \, d_0$. Vorzugsweise hat der Kunststoff im Bodenbereich eine untere Stärke von wenigstens 0.6 mm, vorzugsweise wenigstens 0.7 mm und besonders bevorzugt eine solche von wenigstens 0.8 mm. Die maximale Stärke des Kunststoffs im Bodenbereich beträgt weniger als 2 mm, vorzugsweise weniger als 1.8 mm und besonders bevorzugt weniger als 1.5 mm.

Das Verhältnis von Grundfläche zur Innenfläche des Doms ist zweckmässigerweise grösser als Faktor 2, vorzugsweise grösser als > Faktor 3 und besonders bevorzugt zwischen Faktor 3 und 4. Die Innenfläche ist beim dargestellten Kegelstumpf die Summe aus der Mantelfläche und der Deckfläche 33. In Versuchen wurde herausgefunden, dass durch die Verstreckung des Kunststoffs im vorgenannten Umfang ein überraschend stabiler Boden ausgebildet wird, welcher auch hohen Druckbelastungen von 10 bar und mehr standhalten kann.

Um die Steifigkeit des Doms zu erhöhen sind in dessen Mantelfläche Rillen 35 vorgesehen. Die Rillen 35 können als längliche Erhebungen oder Einbuchtungen ausgebildet sein. Sie erstrecken sich im Wesentlichen über die ganze Länge der Mantelfläche, d.h. ungefähr vom Behälterboden bis zur Deckfläche des Doms. Die Deckfläche 33 des Doms besitzt in der Mitte eine Vertiefung 37, sodass um die Vertiefung 37 herum eine ringförmige Erhebung 39 gebildet ist. Diese Ausgestaltung der Deckfläche 33 dient ebenfalls der zusätzlichen Versteifung des Doms.

Um den Dom herum ist im Boden 13 eine ringförmige Standfläche 41 gebildet. Die Standfläche 41 kann die Gestalt einer Ringscheibe haben, deren Breite 1/15 bis 1/6, vorzugsweise 1/13 bis 1/8 des Behälterdurchmessers entsprechen kann. Die Standfläche ist im Wesentlichen flach gestaltet. Anschliessend an die Standfläche 41 geht der Boden in einem zunächst abnehmenden und danach wieder zunehmenden Krümmungsradius in die Seitenwände über. Dadurch ist ein gekrümmter Übergangsbereich zwischen dem Boden und den Seitenwänden definiert. Dabei entspricht der kleinste Krümmungsradius des Übergangsbereichs wenigstens dem 0.1-fachen, vorzugsweise dem 0.15-fachen und besonders bevorzugt wenigstens dem 0.18-fachen Behälterdurchmesser (gemessen nach dem gekrümmten Übergangsbereich, wo die Tangente an den Behältermantel eine Vertikale ist).

Gemäss Figur 5 sind an der Stirnfläche des Randes der Behälteröffnung im Kunststoff zwei voneinander beabstandete Ringe 43a, 43b ausgebildet. Die Ringe 43a, 43b besitzen oben eine abgeflachte Stelle 45 von wenigstens 0.2 und vorzugsweise wenigstens 0.4 mm Breite und maximal 1.0 und vorzugsweise 0.8mm. Die abgeflachten Stellen 45 dienen als Dichtflächen im Zusammenspiel mit einer in einen Deckel eingelegten Flachdichtung.

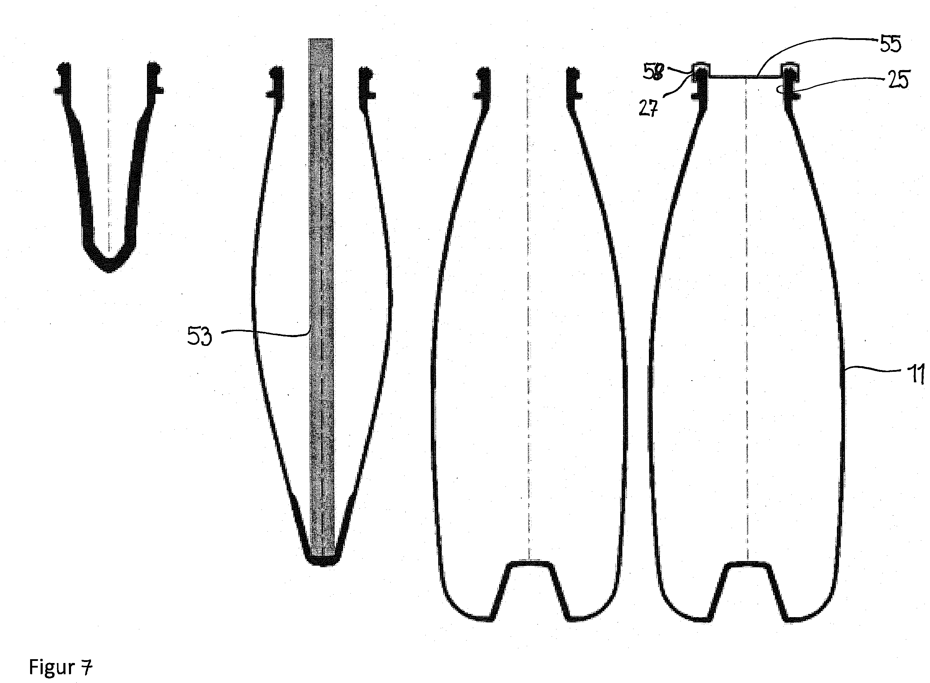

Die Ringwulste 27,28 und die dazwischen liegende Ringnut dienen dem Eingriff eines Greifwerkzeugs, um den Preform resp. später den fertigen Behälter mittels eines Werkzeugs greifen und transportieren zu können. Je nach eingesetztem Greifwerkzeug können die Ringwulste 27,28 und der Abstand zwischen diesen anders gestaltet sein. Im Ausführungsbeispiel der Figur 7 haben die beiden Ringwulste 27,28 einen anderen Querschnitt und liegen weiter auseinander, um mit einem entsprechenden Greifwerkzeug gefasst werden zu können. Die Gestaltung der Ringwulste ist jedoch nicht Gegenstand der vorliegenden Erfindung, sodass auf eine nähere Beschreibung verzichtet werden kann.

Um einen in den Figur 6 nicht näher gezeigten Deckel auf die Behälteröffnung 25 aufsetzen und verkrimpen zu können, ist am ersten Ringwulst 27 eine Mehrzahl von radial abstehenden Noppen 47 angeformt. Die Noppen 47 besitzen eine Höhe von 0.02 bis 0.5 mm, vorzugsweise 0.05 bis 0.3 mm und dienen der vorläufigen Zentrierung und Fixierung eines auf den Behälter 11 augesetzten Metalldeckels. Beim Verkrimpen des Deckelrandes, bei dem der Deckelrand um den Ringwulst 27 herumgebogen wird, kann das Metall wegen des vorhandenen Spiels von vorzugsweise zwischen 0.1 bis 0.3 mm zwischen Ringwulst und Deckelrand nachgeben. Vorteilhaft sind einzelne Noppen 47 in der Trennebene 49 (Fig. 6 unten) und eine Mehrzahl Noppen 47 im mittleren Bereich der Blasformhälften vorgesehen (Fig. 6 oben und in der Mitte).

Fig. 7 zeigt die Herstellung eines erfindungsgemässen Behälters ausgehend von einem Preform 51. Der Preform 51 wird in einer Blasform mit einer der Gestalt des herzustellenden Behälters entsprechenden Innenkontur zuerst mittels eines Reckdorns 53 in der Länge gestreckt und in einem zweiten Schritt mittels Druckbeaufschlagung auf die endgültige Form aufgeblasen. Am Schluss wird die Behälteröffnung 25 mit einem Deckel 55 verschlossen. Dabei wird der äussere Rand 57 des Deckels 55 um den Ringwulst 27 gebogen bzw. verkrimpt. Im Deckel 55 ist normalerweise ein Ventil 57 integriert, durch welches der Behälter befüllt und das Füllgut dosiert wieder abgegeben werden kann.

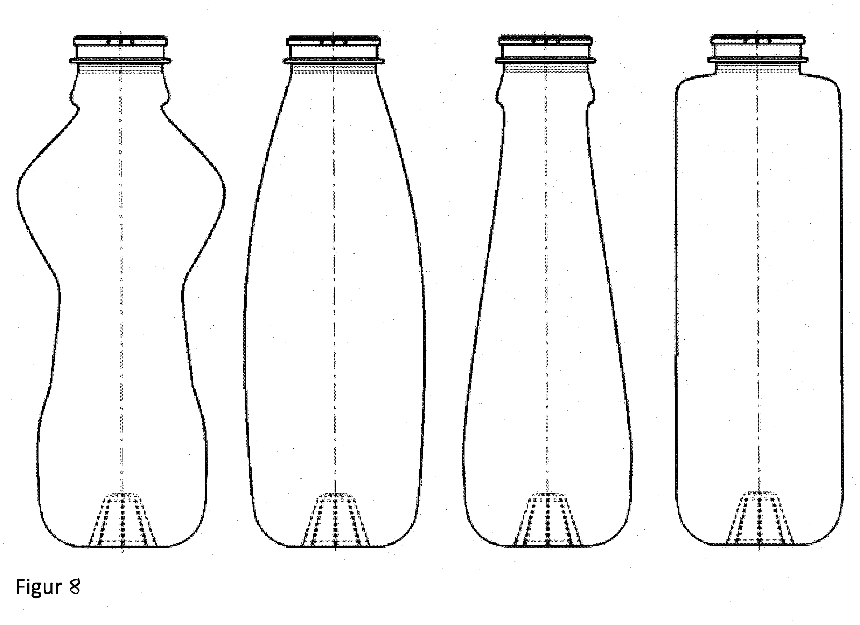

In Figur 8 sind verschiedene mögliche Behälterformen dargestellt. Sie alle zeichnen sich durch einen erfindungsgemässen Boden- und Halsbereich aus, welche den Kunststoffbehälter erst für die Aufbewahrung von unter Druck stehenden Füllgütern geeignet machen.

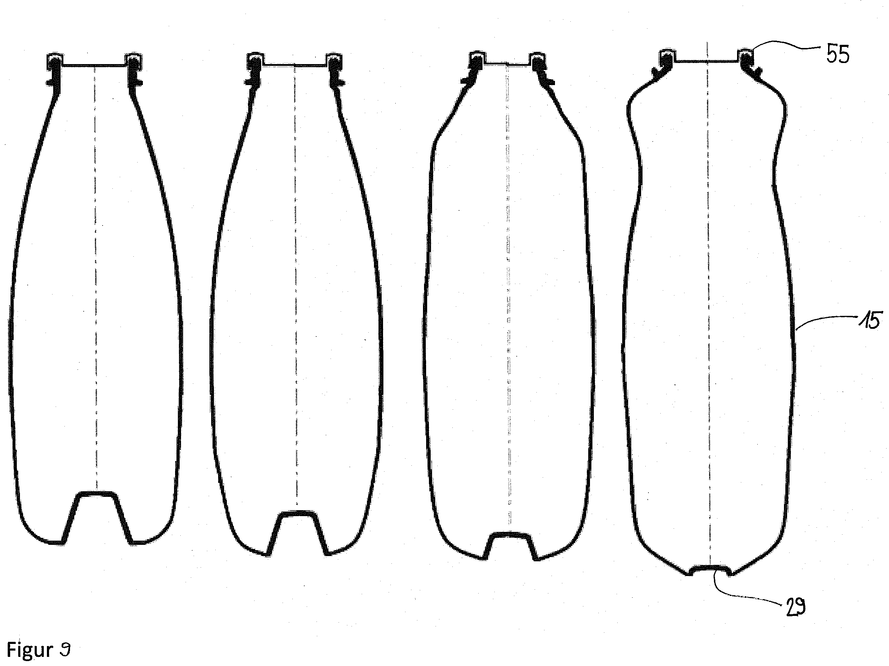

Figur 9 zeigt die Verformung des Behälters 11, wenn dieser bei einem Innendruck von 9 bis 10 bar (Raumtemperatur) auf ungefähr 80 °C erwärmt wird. Dies entspricht etwa einer Situation, wenn ein Druckbehälter im Sommer hinter einer Windschutzscheibe eines Autos liegen gelassen wird. Es ist erkennbar, dass insbesondere die weniger stark verstreckten Bereiche sich verformen und der Boden sich nach aussen wölbt. Dabei wird der Dom 29 zusammengedrückt. Durch die besondere Gestaltung des Doms 29 kann sich dieser jedoch nicht nach aussen wölben und eine Standfläche bleibt immer noch erhalten, sodass der Behälter nicht umkippt (Fig. 9, Behälter rechts aussen). Es ist gut erkennbar, dass der Halsbereich, welcher weniger stark verstreckt ist als der übrige Behälterkörper sich bei extremen Bedingungen zwar nach aussen wölbt, jedoch nicht berstet.

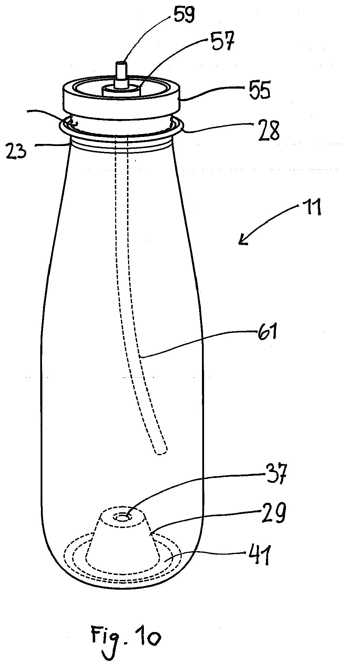

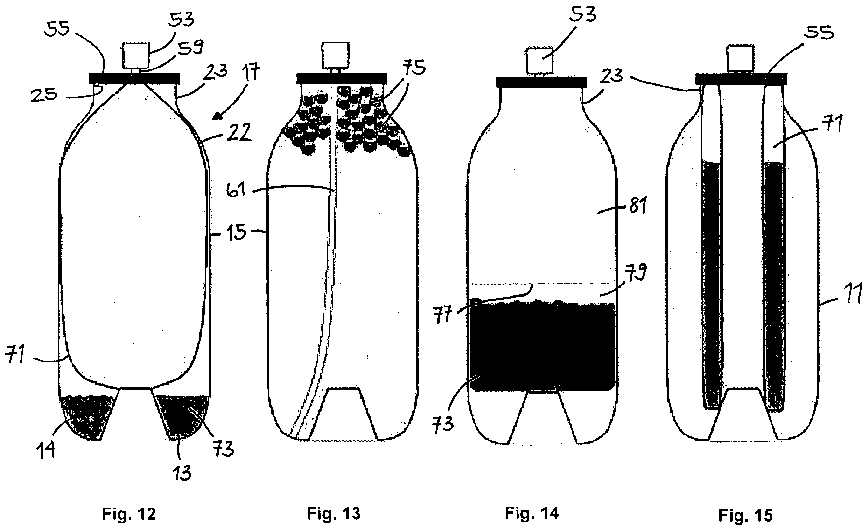

Figur 10 zeigt einen erfindungsgemässen Druckbehälter 11, welcher mit einem Deckel 55 mit integriertem Ventil 57 verschlossen ist. Aus dem Ventil 57 ragt ein Ausgaberohr 59. Innen ist am Ventil 57 ein Steigrohr 61 angeschlossen, durch welches ein im Behälter sich befindliches und Druck stehendes Füllgut 63 (Fig. 12) ausgegeben wird, wenn das Ventil 57 betätigt wird.

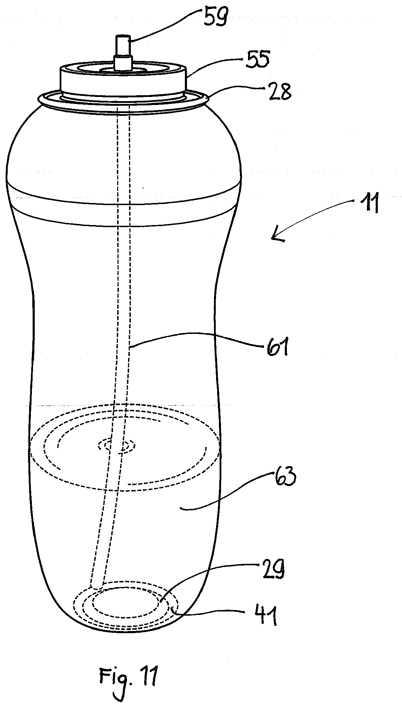

Figur 11 zeigt den gleichen Druckbehälter 11, nachdem dieser während 12 Stunden einer Umgebungstemperatur von 50 °C ausgesetzt wurde.

Die in den Figuren 12 und 14 gezeigten Ausführungsbeispiele eines Druckbehälters umfassen jeweils einen äusseren Behälter 11 mit einem Boden 13, welcher über einen gekrümmten Übergangsbereich 14 in die Seitenwände 15 übergeht. Der oben an die Seitenwände anschliessende Halsbereich 17 umfasst eine Schulter 21, welche in einen zylindrischen Stutzen 23 übergeht. Der Stutzen 23 besitzt eine Behälteröffnung 25, welche mit einem Deckel 55 fest verschlossen ist. Im Deckel 55 ist ein nicht näher gezeigtes Ventil 57 integriert, welches mit einem Abgaberohr 59 in Verbindung steht. Auf das Abgaberohr 59 ist ein Sprühknopf 53 aufgesetzt. Diese Merkmale sind bei allen Ausführungsformen vorhanden, sodass nachfolgend nur noch auf die Besonderheiten der einzelnen Ausführungsbeispiele hingewiesen zu werden braucht.

Beim ersten Ausführungsbeispiel gemäss Figur 12 ist ein innerer Behälter 71 vorgesehen, in welchem das abzugebende Füllgut aufgenommen ist. Der Behälter 71 ist vorzugsweise ein falt- oder kollabierbarer Beutel, welcher am Ventil 57 angeordnet ist. Im äusseren Behälter 11 ist eine wässerige Lösung 73 enthaltend Zucker und Mikroorganismen, welche einen Gärprozess in Gang bringen können, eingefüllt. Durch den Gärprozess wird, in situ' ein Treibmittel generiert. Als Mikroorganismen kommen Hefe, Bakterien und/oder Pilze in Frage. Durch die Gärung steigt der Innendruck im Behälter 11 und wirkt gleichzeitig auf den inneren Behälter 71, sodass das im inneren Behälter enthaltene Füllgut bei der Betätigung des Sprühknopfs durch die Düse austritt.

Das Ausführungsbeispiele zwei bis vier unterscheiden sich vom ersten dadurch, dass der äussere Behälter 11 mit dem Ventil 57 kommuniziert und das abzugebende Füllgut im selbigen eingefüllt ist. Als Treibmittel dient wie im Beispiel 1 eine mit Mikroorganismen versetzte Nährlösung, welche nun jedoch - im Unterschied zu Beispiel 1 - in einem oder mehreren inneren Behältern enthalten ist.

Das Beispiel gemäss Figur 13 ist dadurch gekennzeichnet, dass dehn-oder quellbare Kügelchen 75 vorgesehen sind, in welchen die Nährlösung und die Mikroorganismen enthalten sind. Durch die Gärung werden die Kügelchen 75 aufgeblasen oder quellen und entwickeln so den nötigen Druck für die Ausgabe des Füllguts durch das Ventil (57).

Bei der Ausführungsform gemäss Figur 14 ist der Behälter in zwei Kammern 79, 81 unterteilt. Die Unterteilung kann beispielsweise durch einen Kolben 77 bewirkt sein Dabei ist in der unteren Kammer 79 die Treibmittellösung 73 eingefüllt. Unter dem entstehenden Innendruck übt der verschiebbare Kolben einen Druck auf das in der Kammer 81 enthaltene Füllgut aus, welches bei Betätigung des Ventils über die Düse austreten kann. Anstelle eines Kolbens könnte auch eine dehnbare Membran oder ein dehnbarer Körper eingesetzt sein. Ein anderes Beispiel zeichnet sich durch einen Doppelkammerbehälter aus. Dabei ist im Behälter 11 ein innerer Behälter 71 eingebracht. Der innere Behälter 71 ist vorzugsweise am Deckel 55 angeordnet und besteht aus einem dehnbaren Material, z.B. einem Polyethylenrohr. Bei der Gärung übt der innere dehnbare Behälter einen Druck auf das Füllgut aus.

Der Druckbehälter kann zu 80 bis 90 % oder mehr mit der abzugebenden Zusammensetzung, welche sich in einem separaten Beutel befindet, gefüllt sein. Der Rest des Volumens wird wenigstens teilweise mit einer zuckerhaltigen Nährlösung, welche mit Mikroorganismen, z.B. Hefebakterien, versetzt ist, gefüllt. Weil Zucker in Wasser sehr gut löslich ist (ca. 200 g Zucker pro 100 ml Wasser bei Raumtemperatur) kann bereits mit einer kleinen Zuckermenge über eine längere Zeitspanne ein relativ grosser Innendruck erhalten bleiben. Nachdem die Gärung bei einem Druck von ca. 8 bis 10 bar von selbst zum Stillstand kommt, kann durch die Zugabe einer ausreichenden Menge Zucker sichergestellt werden, dass das durch den Kunststoff entweichende Kohlendioxid durch den Gärprozess kontinuierlich durch neu gebildetes Kohlendioxid ersetzt wird. Dies bedeutet, dass der Innendruck über längere Zeit bei wenigstens 8 bar gehalten werden kann. Vorzugsweise wird deshalb eine solche Menge Zucker zugesetzt, die ausreicht, um mindestens das 10-fache Volumen, vorzugsweise mindestens das 20-fache Kohlendioxidvolumen des Druckbehälters zu erzeugen. Nachdem bei der Gärung pro Zuckermolekül 2 Moleküle $CO_2$ entstehen, kann mit einem Mol Zucker (180 g) bereits 44.8 lt. $CO_2$ hergestellt werden (Raumtemperatur). Bei einem Behälter von 200 ccm Inhalt muss deshalb ca. 9 g Zucker zugegeben werden, um insgesamt ca. 2 lt. Kohlendioxid zu erzeugen. Diese Menge Zucker liesse sich bereits in weniger als ca. 5 ml Wasser lösen. Es ist denkbar, dass der wässerigen Zuckerlösung noch weitere Verbindungen zugesetzt werden, um den Gärprozess beispielsweise in einem idealen pH-Bereich zu halten. Die zuzugebende Menge Zucker berechnet sich nach folgender Formel:

$$\text{Menge Zucker (in g)} = \text{BV (in lt.)} * \text{gewünschtes Vielfaches des BV} * 4.5 \text{ g/lt.}$$

wobei mit BV das Behältervolumen bezeichnet.

Für einen Druckbehälter von 200 ccm Inhalt müsste somit theoretisch 18 g Zucker zugegeben werden, um das 20-fache Behältervolumen an Kohlendioxid zu erzeugen.

Zu berücksichtigen ist allerdings, dass die Hefegärung bei einem Alkoholgehalt von 16% zum Erliegen kommt, da der Alkohol die Hefe abtötet. Weiter tritt unter anaeroben Bedingungen relativ schnell eine Verlangsamung der Gärung ein, weil die Zellen sich nicht mehr so schnell wie am Anfang teilen. Ausserdem hat auch der steigende Druck einen negativen Einfluss auf die Hefegärung, welche bei einem Druck zwischen 8 und 10 bar ebenfalls zum Erliegen kommt. Folglich muss das Gemisch aus Wasser und Zucker so gewählt werden, dass der Alkoholgehalt durch den Zuckerabbau deutlich unter den 16 Volumenprozenten bleibt.

Legende

| 11 | Druckbehälter |
| 13 | Boden |
| 14 | gekrümmter Übergangsbereich zwischen Boden und Seitenwänden |
| 15 | Seitenwände des Druckbehälters |
| 17 | Halsbereich |
| 19 | Behälterkörper |
| 21 | Schulter |
| 23 | zylindrischer Stutzen |
| 25 | Behälteröffnung |
| 27 | Oberer Ringwulst |
| 28 | Unterer Ringwulst |
| 29 | Vertiefung, Dom |
| 31 | Grundfläche des Doms |
| 33 | Deckfläche des Doms |
| 35 | Rillen |
| 37 | Vertiefung |
| 39 | ringförmige Erhebung |
| 41 | Standfläche |
| 43a,43b | Ringe an der Stirnfläche des Randes |
| 45 | Abgeflachte Stellen der Ringe |
| 47 | Noppen |
| 49 | Trennebene der Blasformhälften |
| 51 | Preform |
| 53 | Reckdorn |
| 55 | Deckel |
| 57 | Ventil |
| 59 | Ausgaberohr |
| 61 | Steigrohr |

| 71 | innerer Behälter |
| 73 | wässerige Lösung, Treibmittellösung |
| 75 | Kügelchen |
| 77 | Kolben |
| 79,81 | Kammern |

**Patentansprüche**

**1.** Druckbehälter, insbesondere Aerosolflasche oder -dose, mit

- einem im Wesentlichen formstabilen, vorzugsweise zylindrischen ersten Behälter (11) mit einem Boden, Seitenwänden und einem Halsbereich mit einer Öffnung,
- einem Deckel mit Ventil (57), mit welchem die Öffnung verschlossen ist, und
- einem im ersten Behälter (11) angeordneten zweiten Behälter (71), wobei im zweiten Behälter eine auszugebende Grundzusammensetzung und im ersten Behälter eine Treibmittelzusammensetzung in Gestalt einer Nährlösung und Mikroorganismen aufgenommen ist,

**dadurch gekennzeichnet,**
**dass** der erste Behälter (11) aus einem barrierefreien thermoplastischen Kunststoff <u>mit einer Gasdurchlässigkeit für Kohlendioxid von mehr als 0.5 *10$^{-2}$ ml/(cm$^2$ *atm * Tag)</u> hergestellt ist.

**2.** Druckbehälter nach Anspruch 1,
**dadurch gekennzeichnet,**
**dass** der erste Behälter (11) aus einem barrierefreien thermoplastischen Kunststoff hergestellt ist, und in diesem eine Nährlösung und Mikroorganismen aufgenommen sind, welche Mikroorganismen in der Lage sind, durch Gärung Kohlendioxid freizusetzen, und der zweite Behälter (71) am Ventil (57) angeordnet ist und der Aufnahme der auszugebenden Zusammensetzung dient.

**3.** Druckbehälter nach Anspruch 1,
**dadurch gekennzeichnet,**
**dass** der erste Behälter (11) aus einem barrierefreien thermoplastischen Kunststoff hergestellt ist und der Aufnahme der auszugebenden Zusammensetzung dient und wenigstens ein zweiter dehnbarer Behälter (71) im ersten Behälter (11) angeordnet ist und in diesem eine Nährlösung und Mikroorganismen aufgenommen sind.

**4.** Druckbehälter nach Anspruch 3,
**dadurch gekennzeichnet,**
**dass** eine Mehrzahl von zweiten Behältern vorgesehen sind, welche beispielsweise die Gestalt von Kugeln (75) besitzen können.

**5.** Druckbehälter nach einem der Ansprüche 1 bis 4, **dadurch gekennzeichnet, dass** eine solche Menge Nährlösung eingefüllt ist, dass der durch den gasdurchlässigen Kunststoff im Zeitablauf verursachte Gasverlust im Wesentlichen ausgeglichen wird.

**6.** Druckbehälter nach einem der Ansprüche 1 bis 5, **dadurch gekennzeichnet, dass** eine solche Menge Nährlösung eingefüllt ist, um wenigstens das 10-fache, vorzugsweise wenigstens das 20-fache und besonders bevorzugt wenigstens das 30-fache Volumen des Druckbehälters an Kohlendioxid zu erzeugen.

**7.** Druckbehälter nach einem der Ansprüche 1 bis 6, **dadurch gekennzeichnet, dass** der erste Behälter (11) aus einem thermoplastischen Kunststoff, insbesondere PET, PET Copolyester mit Isophthalsäure und Diethylenglykol, PET, PEN, PEF, PLA hergestellt ist.

**8.** Druckbehälter nach einem der Ansprüche 1 bis 7, **dadurch gekennzeichnet, dass** der erste Behälter (11) ausgelegt ist, um einem Innendruck von mehr als 8 bar, vorzugsweise mehr als 10 bar und besonders bevorzugt mehr als 12 bar standzuhalten.

**9.** Druckbehälter nach einem der Ansprüche 1 bis 8, **dadurch gekennzeichnet, dass** der eingesetzte Kunststoff eine intrinsische Viskosität von >0.85 dl/g (nach **ISO** 1628/1:2009 bestimmt) hat.

**EP 2 807 091 B1**

10. Druckbehälter nach einem der Ansprüche 1 bis 9, **dadurch gekennzeichnet, dass** der erste Behälter (11) aus einem Preform in einem Streckblasprozess hergestellt ist.

11. Druckbehälter nach einem der Ansprüche 1 bis 10, **dadurch gekennzeichnet, dass** der Deckel (55) im Wesentlichen gasdicht mit dem ersten Behälter (11) verbunden ist.

12. Druckbehälter nach einem der Ansprüche 1 bis 11, **dadurch gekennzeichnet, dass** der zweite Behälter (71) aus einem flexiblen, vorzugsweise dehnbaren Material hergestellt ist.

13. Druckbehälter nach einem der Ansprüche 1 bis 12, **dadurch gekennzeichnet, dass** der zweite Behälter (71) ein Beutel ist, welcher vorzugsweise aus einer ein-, zwei-oder noch mehr Schichten aufweisenden Kunststoff- oder Aluminiumfolie, einer Aluminiumfolie, gegebenenfalls ein- oder zweiseitig kunststoffbeschichtet, oder Ähnlichem, besteht.

14. Druckbehälter nach einem der Ansprüche 1 bis 13, **dadurch gekennzeichnet, dass** der zweite Behälter (71) mit dem Abgabeventil (57) verschweisst, verklebt, am Abgabeventil (57) angespritzt oder festgeklemmt ist.

15. Druckbehälter nach einem der Ansprüche 1 bis 14, **dadurch gekennzeichnet, dass** der Deckel (55) aus Metall, insbesondere aus Aluminium, einer Aluminiumlegierung, Weissblech oder Stahlblech, hergestellt ist.

16. Druckbehälter nach einem der Ansprüche 1 bis 15, **dadurch gekennzeichnet, dass** der Deckel (55) lösbar mit dem ersten Behälter (11) verbunden resp. verbindbar ist.

17. Druckbehälter nach einem der Ansprüche 1 bis 16, **dadurch gekennzeichnet, dass** zwischen dem Deckel (55) und dem oberen Rand des ersten Behälters eine Dichtung vorgesehen ist.

18. Druckbehälter nach einem der Ansprüche 1 bis 17, **dadurch gekennzeichnet, dass** der Kunststoff Füllstoffe oder Additive, insbesondere IR-Absorber, UV-Blocker, Chain Extender, Gleitmittel etc. enthält.

19. Druckbehälter nach einem der Ansprüche 1 bis 18, **dadurch gekennzeichnet, dass** der Kunststoff aus 0 bis 100%, vorzugsweise 10 bis 80% und ganz besonders bevorzugt 30 bis 60% Regenerat hergestellt ist.

20. Druckbehälter nach einem der Ansprüche 1 bis 19, **dadurch gekennzeichnet, dass** der Kunststoff biologisch abbaubar ist.

21. Druckbehälter nach einem der Ansprüche 1 bis 20, **dadurch gekennzeichnet, dass** der Kunststoff aus Polymilchsäure, Polyhydroxyalkanoate, z.B.Polyhydroxybuttersäure, hergestellt ist.

22. Druchbehälter nach einem der Ansprüche 1 bis 21, **dadurch gekennzeichnet, dass** der eingesetzte Kunststoff eine Gasdurchlässigkeit für Kohlendioxid von vorzugsweise mehr als $1.0 *10^{-2}$ ml/(cm$^2$ *atm * Tag) und besonders bevorzugt mehr als $2.0 *10^{-2}$ m)/(cm$^2$ *atm * Tag) besitzt.

23. Druckbehälter nach einem der Ansprüche 1 bis 22, **dadurch gekennzeichnet, dass** der eingesetzte Kunststoff eine Gasdurchlässigkeit für Kohlendioxid andererseits von weniger als $10 *10^{-2}$ ml/(cm$^2$ *atm * Tag) hat.

**Claims**

1. Pressure vessel, in particular aerosol bottle or can, with

   - a substantially dimensionally stable, preferably cylindrical, first container (11) with a bottom, side walls and a neck area with an opening,
   - a cap with a valve (57) with which the opening is closed and
   - a second container (71) placed in the first container (11), whereby a basic composition to be delivered is placed in the second container and a propellant composition in form of a nutrient solution and microorganisms is placed in the first container,

   **characterized in that** the first container (11) is made of a barrier-free thermoplastic synthetic material with a gas permeability for carbon dioxide of more than $0.5 \times 10^{-2}$ ml/(cm²*atm*day).

2. Pressure vessel according to claim 1, **characterized in that** the first container (11) in which a nutrient solution and microorganisms are placed is made of a barrier-free thermoplastic synthetic material, which microorganisms are able to release carbon dioxide by fermentation and the second container (71) is placed on the valve and serves to receive the composition to be delivered.

3. Pressure vessel according to claim 1, **characterized in that** the first container (11) is made of a barrier-free thermoplastic synthetic material and serves to receive the composition to be delivered and at least one second expansive container (71) in which a nutrient solution and microorganisms are fed is placed in the first container (11).

4. Pressure vessel according to claim 3, **characterized in that** a multitude of second containers that can have the shape of balls (75) is provided.

5. Pressure vessel according to one of the claims 1 to 4, **characterized in that** such a quantity of nutrient solution is fiilled in so that the gas loss caused by the bas permeable synthetic material is substantially compensated.

6. Pressure vessel according to one of the claims 1 to 5, **characterized in that** a sufficient quantity of nutrient solution is filled-in in order to produce ten times, preferably at least 20 times and particularly preferably at least 30 times the volume of carbon dioxide of the pressure vessel.

7. Pressure vessel according to one of the claims 1 to 6, **characterized in that** the first container (11) is made of a thermoplastic synthetic material, in particular of PET, PET copolyester with isophthalic acid and diethyleneglycol, PET, PEN, PEF, PLA.

8. Pressure vessel according to one of the claims 1 to 7, **characterized in that** the first container (11) is designed to resist to an internal pressure of more than 8 bar, preferably of more than 10 bar and particularly preferably of more than 12 bar.

9. Pressure vessel according to one of the claims 1 to 8, **characterized in that** the synthetic material used has an intrinsic viscosity of 0,85 dl/g (determined according to ISO 1628/1:2009).

10. Pressure vessel according to one of the claims 1 to 9, **characterized in that** the first container (11) is made of a preform in a stretch blow molding process.

11. Pressure vessel according to one of the claims 1 to 10, **characterized in that** the cap (55) is connected to the first container (11) in a substantially gas-tight manner.

12. Pressure vessel according to one of the claims 1 to 11, **characterized in that** the second container (71) is made of a flexible, preferably expandable material.

13. Pressure vessel according to one of the claims 1 to 12, **characterized in that** the second container (71) is a pouch that preferably consists of a plastic or aluminum foil having one, two or more layers, of an aluminum foil, where appropriate plastic coated on one or two sides, or the like.

14. Pressure vessel according to one of the claims 1 to 13, **characterized in that** the second container (71) is welded, glued with the distribution valve (57), injected or clamped on the distribution valve (57).

15. Pressure vessel according to one of the claims 1 to 14, **characterized in that** the cap (55) is made of metal, in particular of aluminum, of an aluminum alloy, a tinplate or a steel plate.

16. Pressure vessel according to one of the claims 1 to 15, **characterized in that** the cap (55) is removably connected or can be removably connected to the first container (11).

17. Pressure vessel according to one of the claims 1 to 16, **characterized in that** a gasket is provided between the cap (55) and the upper edge of the first container.

18. Pressure vessel according to one of the claims 1 to 17, **characterized in that** the synthetic material contains fillers or additives, in particular IR absorbers, UV blockers, chain extenders, lubricants etc.

19. Pressure vessel according to one of the claims 1 to 18, **characterized in that** the synthetic material is made of 0 to 100%, preferably of 10 to 80% and particularly preferably of 30 to 60% regenerated material.

20. Pressure vessel according to one of the claims 1 to 19, **characterized in that** the synthetic material is biodegradable.

21. Pressure vessel according to one of the claims 1 to 20, **characterized in that** the synthetic material is made of polylactic acid, polyhydroxyalkanoates, for example polyhydroxybutyrate.

22. Pressure vessel according to one of the claims 1 to 21, **characterized in that** the synthetic material used has a gas permeability for carbon dioxide of preferably $1.0*10^{-2}$ ml/(cm$^2$ *atm *day) and particularly preferably of more than $2.0*10^{-2}$ ml/(cm$^2$ *atm *day).

23. Pressure vessel according to one of the claims 1 to 22, **characterized in that** the synthetic material used has a gas permeability for carbon dioxide otherwise of less than $10*10^{-2}$ ml/(cm$^2$ *atm *day).

## Revendications

1. Récipient sous pression, en particulier flacon ou bombe aérosol, avec

- un premier récipient de forme sensiblement stable, de préférence cylindrique (11), avec un fond, des parois latérales et une zone de goulot avec une ouverture,
- un couvercle avec une valve (57) avec lequel l'ouverture est fermée et
- un second récipient (71) placé dans le premier récipient (11), cependant qu'une composition de base qui doit être distribuée est logée dans le second récipient et une composition de gaz propulseur sous forme de solution nutritive et de microorganismes est logée dans le premier récipient,

**caractérisé en ce que** le premier récipient (11) est fabriqué en une matière synthétique thermoplastique sans barrière avec une perméabilité au gaz pour le dioxyde de carbone de plus de $0,5*10^{-2}$ ml/(cm$^2$*atm*jour).

2. Récipient sous pression selon la revendication 1, **caractérisé en ce que** le premier récipient (11) qui reçoit une solution nutritive et des microorganismes est fabriqué en une matière synthétique thermoplastique sans barrière, lesquels microorganismes sont en mesure de libérer du dioxyde de carbone par fermentation et que le second récipient (71) est placé sur la valve (57) et sert de logement à la composition qui doit être distribuée.

3. Récipient sous pression selon la revendication 1, **caractérisé en ce que** le premier récipient (11) est fabriqué en une matière synthétique thermoplastique sans barrière et sert à recevoir la composition qui doit être distribuée et qu'au moins un second récipient expansible (71) qui reçoit une solution nutritive et des microorganismes est placé dans le premier récipient (11).

4. Récipient sous pression selon la revendication 3, **caractérisé en ce qu'**une multitude de seconds récipients qui peuvent, par exemple, posséder la forme de billes (75) est prévue.

5. Récipient sous pression selon l'une des revendications 1 à 4, **caractérisé en ce qu'**il est rempli une quantité de solution nutritive telle que la perte de gaz causée au cours du temps par la matière synthétique perméable au gaz est substantiellement compensée.

6. Récipient sous pression selon l'une des revendications 1 à 5, **caractérisé en ce qu'**il est rempli une quantité de solution nutritive suffisante pour produire au moins 10 fois, de préférence au moins 20 fois et de manière particulièrement préférée au moins 30 fois le volume du récipient sous pression en dioxyde de carbone.

7. Récipient sous pression selon l'une des revendications 1 à 6, **caractérisé en ce que** le premier récipient (11) est fabriqué en matière synthétique thermoplastique, en particulier en PET, en copolyester PET avec de l'acide isophtalique et du diéthylèneglocaol, du PET, du PEN, du PEF, du PLA.

8. Récipient sous pression selon l'une des revendications 1 à 7, **caractérisé en ce que** le premier récipient (11) est conçu pour résister à une pression intérieure de plus de 8 bar, de préférence de plus de 10 bar et de manière particulièrement préférée de plus de 12 bar.

9. Récipient sous pression selon l'une des revendications 1 à 8, **caractérisé en ce que** la matière synthétique mise en oeuvre a une viscosité intrinsèque de > 0,85 dl/g (déterminée selon ISO 1628/1:2009).

10. Récipient sous pression selon l'une des revendications 1 à 9, **caractérisé en ce que** le premier récipient (11) est fabriqué à partir d'une préforme dans un processus d'étirage-soufflage.

11. Récipient sous pression selon l'une des revendications 1 à 10, **caractérisé en ce que** le couvercle (55) est relié au premier récipient (11) en étant sensiblement étanche au gaz.

12. Récipient sous pression selon l'une des revendications 1 à 11, **caractérisé en ce que** le second récipient (71) est fabriqué en un matériau flexible, de préférence extensible.

13. Récipient sous pression selon l'une des revendications 1 à 12, **caractérisé en ce que** le second récipient (71) est une poche qui est constituée de préférence par une feuille de matière synthétique ou d'aluminium qui présente une, deux couches ou plus, le cas échéant qui est revêtue par une matière synthétique sur un ou deux côtés, ou équivalent.

14. Récipient sous pression selon l'une des revendications 1 à 13, **caractérisé en ce que** le second récipient (71) est soudé, collé à la valve de distribution (57), est injecté ou serré sur la valve de distribution (57).

15. Récipient sous pression selon l'une des revendications 1 à 14, **caractérisé en ce que** le couvercle (55) est fabriqué en métal, en particulier en aluminium, en un alliage d'aluminium, en tôle blanche ou en tôle d'acier.

16. Récipient sous pression selon l'une des revendications 1 à 15, **caractérisé en ce que** le couvercle (55) est relié ou peut être relié au premier récipient (11) de manière amovible.

17. Récipient sous pression selon l'une des revendications 1 à 16, **caractérisé en ce qu'**il est prévu une étanchéité entre le couvercle (55) et le bord supérieur du premier récipient.

18. Récipient sous pression selon l'une des revendications 1 à 17, **caractérisé en ce que** la matière synthétique contient des matières de remplissage ou des additifs, en particulier des absorbeurs d'infrarouge, des bloqueurs de rayons UV, des agents d'allongement, des lubrifiants etc.

19. Récipient sous pression selon l'une des revendications 1 à 18, **caractérisé en ce que** la matière synthétique est fabriquée en 0 à 100%, de préférence 10 à 80% et de manière particulièrement préférée 30 à 60% de matière régénérée.

20. Récipient sous pression selon l'une des revendications 1 à 19, **caractérisé en ce que** la matière synthétique est biodégradable.

21. Récipient sous pression selon l'une des revendications 1 à 20, **caractérisé en ce que** la matière synthétique est fabriquée à partir d'acide polylactique, de polyhydroxyalcanoates, par exemple en acide hydroxybutyrique.

22. Récipient sous pression selon l'une des revendications 1 à 21, **caractérisé en ce que** la matière synthétique mise en oeuvre possède une perméabilité au gaz pour le dioxyde carbone de préférence de plus de $1.0*10^{-2}$ ml/(cm$^2$ *atm *jour) et de manière particulièrement préférée de plus de $2.0*10^{-2}$ ml/(cm$^2$ *atm *jour).

23. Récipient sous pression selon l'une des revendications 1 à 22, **caractérisé en ce que** la matière synthétique mise en oeuvre possède une perméabilité au gaz pour le dioxyde carbone d'autre part de moins de $10*10^{-2}$ ml/(cm$^2$ *atm *jour).

**Fig. 1**

**Fig. 2**

**Fig. 3**

**Fig. 4**

Detail A
M20:1

**Fig. 5**

**Fig. 6**

Figur 7

Figur 8

Figur 9

Fig. 10

Fig. 11

Fig. 15

Fig. 14

Fig. 13

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE OS2536702 A
- EP 0314554 A
- WO 2004096665 A
- EP 0471503 A